# EUROPÄISCHE PATENTSCHRIFT

(11) **EP 0 584 567 B1**
(45) Veröffentlichungstag und Bekanntmachung des Hinweises auf die Patenterteilung: **28.01.1998**
(21) Anmeldenummer: 93112058.8
(22) Anmeldetag: 28.07.1993
(51) Int. Cl.: C08L 23/02, C08K 3/32, C08K 5/3492

(54) **Flammwidrige Kunststoff-Formmasse mit verbesserter Stabilität**
Fire retardant polymer compositions with increased stability
Compositions polymères iqnifuges à stabilité améliorée

(30) Priorität: 01.08.1992 DE 4225477
(43) Veröffentlichungstag der Anmeldung: 02.03.1994
(73) Patentinhaber: Clariant GmbH, 65929 Frankfurt am Main (DE)
(72) Erfinder: Sicken, Martin, Dr., D-51149 Köln (DE); Wanzke, Wolfgang, Dr., D-86368 Gersthofen (DE)

(56) Entgegenhaltungen:
- EP-A- 0 258 685
- EP-A- 0 484 832

## Beschreibung

Die Erfindung bezieht sich auf eine flammwidrige Kunststoff-Formmasse, die ein Intumeszenz-Flammschutzsystem auf Basis Ammoniumpolyphosphat (APP) enthält und durch die Auswahl geeigneter Zusätze (Synergisten) eine höhere Verarbeitungsstabilität aufweist als bisher bekannte Formmassen mit Intumeszenz-Systemen auf Basis Ammoniumpolyphosphat, im Kontakt mit Wasser die Flammschutzwirkung nicht verliert, sowie eine verringerte Neigung zum "Ausschwitzen" von Bestandteilen des Flammschutzsystems bei längerer Lagerung zeigt.

Bekannt ist die Verwendung eines Intumeszenz-Gemisches für die flammwidrige Ausrüstung von Polyolefinen, wobei ein Gemisch aus Ammoniumpolyphosphat und Tris (2-hydroxyethyl)-isocyanurat zusammen mit Melamin, Pentaerythrit, Tripentaerythrit oder Cyanursäure verwendet wird (vgl. US 4 198 493).

Ferner ist bekannt, eine Kombination aus Ammoniumpolyphosphat und dem Reaktionsprodukt einer Sauerstoffsäure des Phosphors mit einem Hydroxyalkylderivat der Isocyanursäure zu verwenden (vgl. US 4 461 862).

Schließlich sind selbstverlöschende Olefin-Polymere und -Copolymere bekannt, welche Ammoniumpolyphosphat und Tris(2-hydroxyethyl)-isocyanurat enthalten (vgl. EP 258 685).

Die beschriebenen Mischungen entwickeln zwar einen guten oder zumindest ausreichenden Flammschutzeffekt, weisen aber noch verschiedene Nachteile auf, die eine breite technische Anwendung in Polyolefinen bisher behindern.

So sind die Verarbeitungstemperaturen der entsprechenden polymeren Massen durch die Intumeszenz-Mischungen bisher auf 200 bis 250°C begrenzt, der bevorzugte Bereich für die Spritzguß-Verarbeitung von Polypropylen liegt jedoch beispielsweise bei 250 bis 270°C.

Die Wasserlöslichkeit der Intumeszenz-Mischungen oder einzelner Komponenten ist teilweise sehr hoch, so daß der Flammschutzeffekt der so ausgerüsteten polymeren Massen bei Kontakt mit Wasser relativ rasch vermindert oder ganz aufgehoben wird.

Außerdem kann, insbesondere bei erhöhten Gebrauchstemperaturen, ein Teil der Flammschutzmischung aus der polymeren Masse "ausschwitzen", was die Gebrauchsfähigkeit der polymeren Masse einschränkt und auch den Flammschutzeffekt vermindert.

Es wurde nun gefunden, daß bei Verwendung bestimmter aromatischer Carbonsäureester des Tris (2-hydroxyethyl)-isocyanurats als Synergisten zum polymeren Ammoniumphosphat die vorstehend genannten Nachteile vermieden werden können.

Die Erfindung betrifft somit eine flammwidrige Kunststoff-Formmasse bestehend aus
50 bis 85 Gew.-%, bezogen auf die Gesamtmenge der Formmasse, eines Olefinpolymeren und
15 bis 50 Gew.-%, bezogen auf die Gesamtmenge der Formmasse, eines Flammschutzsystems bestehend aus
80 bis 50 Gew.-% eines Ammoniumpolyphosphats der Formel (NH₄PO₃)ₙ, worin n eine Zahl von 200 bis 1000 ist, (=Komponente A), und
50 bis 20 Gew.-% einer Verbindung (= Komponente B) enthaltend
a) Einheiten der Formel I 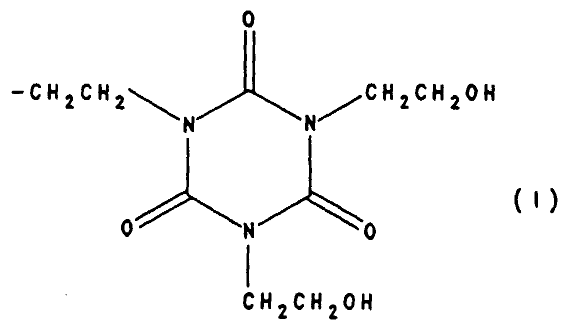
b) Einheiten der Formel II 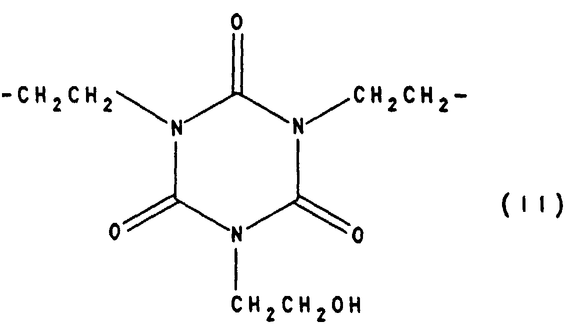
c) Einheiten der Formel III 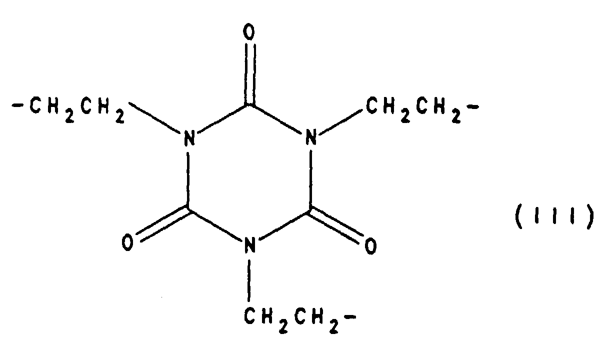 und
d) Einheiten der Formel IV

   Ar(COO-)ₘ (IV),

   worin Ar ein ein-, zwei- oder dreikerniges aromatisches Sechsringsystem bedeutet und m 2, 3 oder 4 ist.

Die erfindungsgemäße flammwidrige polymere Formmasse enthält 50 bis 85, vorzugsweise 60 bis 80 Gew.-% eines der nachstehend aufgeführten Polymeren:
1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise von Cyclopenten oder Norbornen.
2. Mischungen der unter 1) genannten Polymeren, beispielsweise Mischungen von Polypropylen mit Polyethylen oder mit Polyisobutylen.
3. Copolymere von Mono- und Diolefinen untereinander oder mit anderen Vinylmonomeren, wie beispielsweise Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsãure-Copolymere und deren Salze (Ionomere), sowie Terpolymere von Ethylen mit Propylen und einem Dien, wie Hexadien, Dicyclopentadien oder Ethylidennorbornen.
4. Polystyrol, Poly(p-methylstyrol).
5. Copolymere von Styrol oder α-Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie beispielsweise einem Polyacrylat, einem Dien-Polymeren oder einem Ethylen-Propylen-Dien-Terpolymeren; sowie Block-Copolymere des Styrols, wie beispielsweise Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und Alkylacrylate oder Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, die beispielsweise als sogenannte ABS-, MBS-, ASA- oder AES-Polymere bekannt sind.

Bevorzugt als Polymere sind Polyolefine, insbesondere Polypropylen, Polyethylen und Ethylen-Vinylacetat-Copolymere.

Außerdem enthält die erfindungsgemäße Kunststoff-Formmasse 15 bis 50 Gew.-% eines Flammschutzsystems, welches aus zwei Komponenten (A und B) besteht.

Die Komponente A dieses Flammschutzsystems ist ein Ammoniumpolyphosphat der Formel (NH₄PO₃)ₙ, worin n eine Zahl von 200 bis 1000, vorzugsweise etwa 700 ist, welches ein frei fließendes, in Wasser schwer lösliches Pulver darstellt und das mit 0,5 bis 25 Gew.-% eines Coatingsmittels, vorzugsweise mit einem gehärteten Melamin/Formaldehyd-Harz oder einem gehärteten Epoxidharz, umhüllt sein kann.

Die Komponente B des Flammschutzsystems ist ein Umsetzungsprodukt des Tris(2-hydroxyethyl)isocyanurats (THEIC) der Formel 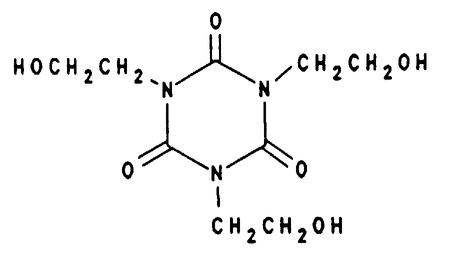 mit einer aromatischen Polycarbonsäure der Formel

Ar(COOH)ₘ

und stellt ein Gemisch von monomeren und oligomeren Estern dar, die auch vernetzt sein können. Der Oligomerisierungsgrad beträgt ca. 2 bis ca. 100, vorzugsweise 2 bis 20. Das Gemisch kann auch Verbindungen mit Etherfunktionen enthalten, die aus der Vernetzung zweier THEIC-Einheiten entstehen.

Die Komponente B des Flammschutzsystems leitet sich demnach von
a) Einheiten der Formel I 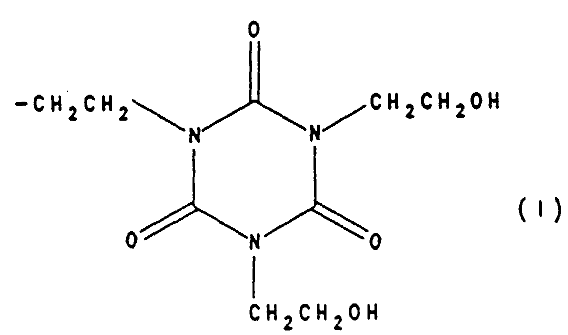
b) Einheiten der Formel II 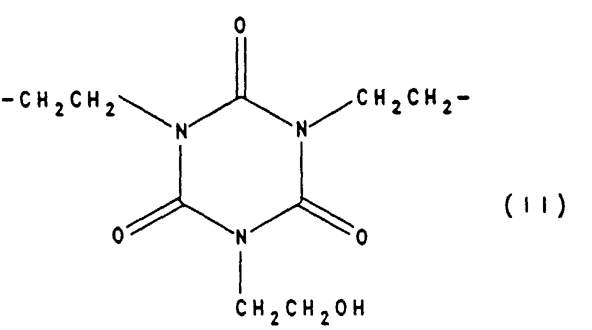
c) Einheiten der Formel III 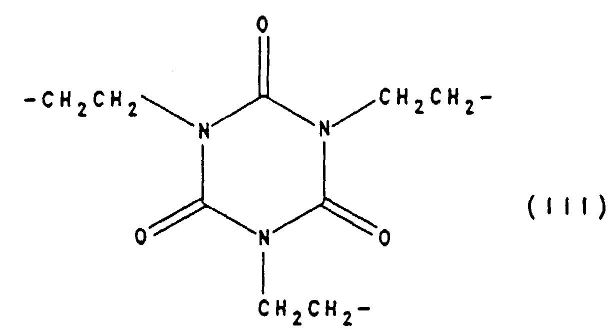 und
d) Einheiten der Formel IV

   Ar(COOH)ₘ (IV),

   worin Ar ein ein-, zwei- oder dreikerniges aromatisches Sechsringsystem bedeutet und m 2, 3 oder 4 ist, ab.

Geeignete Polycarbonsäuren sind beispielsweise Phthalsäure, Isophthalsäure, Terephthalsäure,1,3,5-Benzoltricarbonsäure, 1 ,2,4-Benzoltricarbonsäure, Pyromellthsäure, Mellophansäure, Prehnitsäure, 1-Naphthoesäure, 2-Naphthoesäure, Naphthalindicarbonsäuren, und Anthracencarbonsäuren.

Die Herstellung der Komponente B erfolgt durch Umsetzung des Tris(hydroxyethyl)-isocyanurats mit den Säuren, ihren Alkylestern oder ihren Halogeniden nach folgenden Beispielen:

THEIC-Ethylendiamintetraessigsäureester (für Vergleichsbeispiel B):
230 g (0,88 mol) Tris(2-hydroxyethyl)isocyanurat (THEIC) wurden bei 150°C aufgeschmolzen. Nach Zugabe von 1,5 g Titantetrabutylat und 62 g (0,22 mol) Ethylendiamintetraessigsäure wurde das kräftig gerührte Gemisch ca. 3 h auf 200 bis 210°C erhitzt, wobei 16,5 g Wasser (92 % der Theorie) kondensiert werden konnten. Nach Abkühlen der Schmelze und anschließendem Mahlen erhielt man ein beiges Pulver mit einem Schmelzbereich von 65 bis 80°C. Die Restsäurezahl betrug 13 mg KOH/g.

THEIC-Nitrilotriessigsäureester (für Vergleichsbeispiel C):
261 g (1,0 mol) THEIC wurden bei 150°C aufgeschmolzen. Nach Zugabe von 1,5 g Titantetrabutylat und 63 g (0,33 mol) Nitrilotriessigsäure wurde das kräftig gerührte Gemisch ca. 3 h auf 180 bis 190°C erhitzt, wobei 17 g Wasser (94,5 d.Th.) kondensiert werden konnten. Nach Abkühlen der Schmelze und anschließendem Mahlen erhielt man ein schwach gelbes Pulver mit einem Schmelzbereich von 65 bis 80°C. Die Restsäurezahl betrug 10 mg KOH/g.

THEIC-Maleinsäureester (für Vergleichsbeispiel D):
261 g (1,0 mol) THEIC wurde bei 150°C aufgeschmolzen. Nach Zugabe von 1,5 g Titantetrabutylat und 49 g (0,5 mol) Maleinsäureanhydrid wurde das kräftig gerührte Gemisch innerhalb von 4 h von 190°C auf 230°C erhitzt, wobei 8,8 g Wasser (98 % d.Th.) kondensiert werden konnten. Nach Abkühlen der Schmelze und anschließendem Mahlen erhielt man ein weißes Pulver mit einem Schmelzbereich von 70 bis 80°C. Die Restsäurezahl betrug 6 mg KOH/g.

THEIC-Terephthalsäureester:
979 g (3,76 mol) THEIC wurden bei 150°C aufgeschmolzen. Nach Zugabe von 2,6 g Titantetrabutylat und 311,4 g (1,86 mol) Terephthalsäure wurde das kräftig gerührte Gemisch innerhalb von 7 h von 190°C auf 230°C erhitzt, wobei 66 g Wasser (97,5 % d.Th.) kondensiert werden konnten. Nach Abkühlen der Schmelze und anschließendem Mahlen erhielt man ein weißes Pulver mit einem Schmelzbereich von 80 bis 90°C. Die Restsäurezahl betrug 11 mg KOH/g.

THEIC-Terephthalsäureester:
979 g (3,76 mol) THEIC wurden bei 150°C aufgeschmolzen. Nach Zugabe von 4,1 g Titantetrabutylat und 373,7 g (2,25 mol) Terephthalsäure wurde das kräftig gerührte Gemisch innerhalb von 7 h von 190°C auf 230°C erhitzt, wobei 77 g Wasser (95 % d.Th.) kondensiert werden konnten. Nach Abkühlen der Schmelze und anschließendem Mahlen erhielt man ein weißes Pulver mit einem Schmelzbereich von 90 bis 105°C. Die Restsäurezahl betrug 8 mg KOH/g.

THEIC-Terephthalsäureester:
861 g (3,3 mol) THEIC wurden bei 150°C aufgeschmolzen. Nach Zugabe von 3,7 g Titantetrabutylat und 383,7 g (2,3 mol) Terephthalsäure wurde das kräftig gerührte Gemisch innerhalb von 8 h von 190°C auf 230°C erhitzt, wobei 80 g Wasser (96 % d.Th.) kondensiert werden konnten. Nach Abkühlen der Schmelze und anschließendem Mahlen erhielt man ein weißes Pulver mit einem Schmelzbereich von 100 bis 120°C. Die Restsäurezahl betrug 6 mg KOH/g.

Das Flammschutzssystem besteht zu 80 bis 50 Gew.-% aus der Komponente A und 20 bis 50 Gew.-% aus der Komponente B.

Neben dem Flammschutzsystem kann die erfindungsgemäße Kunststoff-Formmasse zusätzlich die folgenden Additive enthalten:
1. Antioxidantien, beispielsweise alkylierte Monophenole, alkylierte Hydrochinone, hydroxylierte Thiodiphenylether, Alkyliden-Bisphenole, Benzylverbindungen, Acylaminophenole, Ester der β-(3,5-Di-t-butyl-4-hydroxyphenyl)-propionsäure mit ein- oder mehrwertigen Alkoholen, wie beispielsweise mit Methanol, Diethylenglykol, Octadecanol, Triethylenglykol, 1,6-Hexandiol, Pentaerythrit, Neopentylglykol, Tris-hydroxyethylisocyanurat, Thiodiethylenglykol, Di-hydroxyethyl-oxalsäurediamid, Ester der β-(5-t-Butyl-4-hydroxy-3-methylphenyl)-propionsäure mit ein- oder mehrwertigen Alkoholen, wie beispielsweise mit Methanol, Diethylenglykol, Octadecanol, Triethylenglykol, 1,6-Hexandiol, Pentaerythrit, Neopentylglykol, Tris-hydroxyethyl-isocyanurat, Thiodiethylenglykol, Di-hydroxyethyl-oxalsäurediamid, Amide der β-(3,5-Di-t-butyl-4-hydroxyphenyl)-propion-säure.
2. UV-Absorber und Lichtschutzmittel
   2.1 2-(2'-Hydroxyphenyl)-benztriazole, wie beispielsweise das 5'-Methyl-, 3',5'-Di-t-butyl-, 5'-t-Butyl-, 5'-(1,1,3,3-Tetramethylbutyl)-, 5-Chlor-3',5'-di-t-butyl, 5-Chlor-3'-t-butyl-5'-methyl-, 3'-sec.-Butyl-5'-t-butyl-, 4'-Octoxy-, 3',5'-Di-t-amyl-, 3',5'-Bis(α,α-dimethylbenzyl)-Derivat.
   2.2 2-Hydroxybenzophenone, beispielsweise das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3 Ester von gegebenenfalls substituierten Benzoesäuren, beispielsweise 4-t-Butyl-phenylsalicylat, Phenylsalicylat, Octylphenylsalicyalat, Dibenzoylresorcin, Bis-(4-t-butylbenzoyl)resorcin, Benzoylresorcin, 3,5-Di-t-butyl-4-hydroxybenzoesäure-2,4-di-t-butylphenylester, 3,5-Di-t-butyl-4-hydroxybenzoesäure-hexadecylester.
   2.4 Acrylate, beispielsweise
      α-Cyan-β,β-diphenylacrylsäure-ethylester bzw. -iso-octylester,
      α-Carbomethoxyzimtsäuremethylester, α-Cyano-β-methyl-p-methoxyzimtsäure-methylester bzw. -butylester, α-Carbomethoxy-p-methoxyzimtsäure-methylester,
      N-(β-Carbomethoxy-9-cyano-vinyl)-2-methyl-indolin.
   2.5 Nickelverbindungen, beispielsweise
      Nickelkomplexe des 2,2'-Thio-bis-[4-(1,1,3,3-tetramethyl-butyl)-phenols], wie der 1:1-oder 1:2-Komplex, gegebenenfalls mit zusätzlichen Liganden wie n-Butyl-amin, Triethanolamin oder N-Cyclohexyl-diethanolamin, Nickelalkyl-dithiocarbamate, Nickelsalze von 4-Hydroxy-3,5-di-t-butyl-benzylphosphonsäure-mono-alkylestern wie vom Methyl- oder Ethylester, Nickelkomplexe von Ketoximen wie vom 2-Hydroxy-4-methyl-phenylundecylketoxim, Nickelkomplexe des 1-Phenyl-4-lauroyl-5-hydroxy-pyrazols, gegebenenfalls mit zusätzlichen Liganden, Nickelsalze der 2-Hydroxy-4-alkoxybenzophenone.
   2.6 Sterisch gehinderte Amine, beispielsweise
      2.6.1 Bis(2,2,6,6-tetramethylpiperidyl)-sebacat, Bis-(1,2,2,6,6-pentamethylpiperidyl)-sebacat, Bis-(2,2,6,6-tetramethylpiperidyl)-glutarat, Bis-(1,2,2,6,6-pentamethylpiperidyl)-glutarat, Bis-(2,2,6,6-tetramethylpiperidyl)-succinat, Bis-(1,2,2,6,6-pentamethylpiperidyl)-succinat, 4-Stearyloxy-2,2,6,6-tetramethylpiperidin, 4-Stearyloxy-1,2,2,6,6-pentamethylpiperidin, 4-Stearoyloxy-2,2,6,6-tetramethylpiperidin, 4-Stearoyloxy-1,2,2,6,6-pentamethylpiperidin, 2,2,6,6-Tetramethylpiperidylbehenat, 1,2,2,6,6-Pentamethylpiperidylbehenat, 2,2,4,4-Tetramethyl-7-oxa-3,20-diazadispiro-[5.1.11.2]-heneicosan-21-on, 2,2,3,4,4-Penta-methyl-7-oxa-3,20-diazadispiro-[5.1.11.2]-heneicosan-21-on, 2,2,4,4-Tetramethyl-3-acetyl-7-oxy-3,20-diaza-dispiro-[5.1.11.2]-heneicosan-21-on2,2,4,4-Tetramethyl-7-oxa-3,20-diaza-20-(β-lauryloxy-carbonylethyl)-21-oxo-dispiro-[5.1.11.2]-heneicosan, 2,2,3,4,4-Pentamethyl-7-oxa-3,20-diaza-20-(β-lauryloxy-carbonylethyl)-21-oxo-dispiro-[5.1.11.2]-heneicosan, 2,2,4,4-Tetramethyl-3-acetyl-7-oxa-3,20-diazo-20-(β-lauryloxy-carbonyl-ethyl)-21-oxo-dispiro-[5.1.11.2]-heneicosan, 1,1',3,3',5,5'-Hexahydro-2,2',4,4',6,6'-hexaaza-2,2',6,6'-bismethano-7,8-dioxo-4,4'-bis-(1,2,2,6,6-pentamethyl-4-piperidyl)biphenyl, N,N',N",N"'-Tetrakis-[2,4-bis-[N-(2,2,6,6-tetramethyl-4-piperidyl)-butylamino]-1,3,5-triazin-6-yl]-4,7-diazadecan-1,10-diamin,N,N',N",N"'-Tetrakis[2,4-bis-[N (1,2,2,6,6-pentamethyl-4-piperidyl)-butylamino]-1,3,5-triazin-6-yl]-4,7-diazadecan-1,10-diaminN,N',N",N"'-Tetrakis-[2,4-bis-[N-(2,2,6,6-tetramethyl-4-piperidyl)-methoxypropylamino]-1,3,5-triazin-6-yl]-4,7-diazadecan-1,10-diamin, N,N',N",N"'-Tetrakis-[2,4-bis-[N-(1,2,2,6,6-pentamethyl-4-piperidyl)-methoxypropylamino]-1,3,5-triazin-6-yl]-4,7-diazadecan-1,10-diamin, Bis-(1,2,2,6,6-pentamethyl-piperidyl)-n-butyl-3,5-di-t-butyl-4-hydroxy-benzylmalonat, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethylpiperazinon).
      2.6.2 Poly-N,N'-bis(2,2,6,6-tetramethyl-4-piperidyl)-1,8-diazadecylen,Kondensationsprodukt aus 1-(2-Hydroxyethyl)-2,2,6,6-tetramethyl-4-hydroxy-piperidin und Bernsteinsäure, Kondensationsprodukt aus N,N'-Bis-(2,2,6,6-tetramethyl-4-piperidyl)-hexamethylendiamin und 4-t-Octylamino-2,6-dichlor-1,3,5-triazin, Kondensationsprodukt aus N,N'-Bis-(2,2,6,6-tetramethyl-4-piperidyl)-hexamethylendiamin und 4-Morpholino-2,6-dichlor-1,3,5-triazin.
   2.7 Oxalsäurediamide, beispielsweise
      4,4'-Di-octyloxy-oxanilid, 2,2'-Di-octyloxy-5,5'-di-t-butyl-oxanilid, 2,2'-Didodecyloxy-5,5'-di-t-butyloxanilid, 2-Ethoxy-2'-ethyl-oxanilid, N,N'-Bis-(3-dimethylaminopropyl)-oxalamid, 2-Ethoxy-5-t-butyl-2'-ethyloxanilid und dessen Gemisch mit 2-Ethoxy-2'-ethyl-5,4-di-t-butyl-oxanilid, Gemische von o- und p-Methoxy- sowie von o- und p-Ethoxy-di-substituierten Oxaniliden.
3. Metalldesaktivatoren, beispielsweise
   N,N'-Diphenyloxalsäurediamid, N-Salicylyl-N'-salicyloyl-hydrazin, N,N'-Bis-salicyloyl-hydrazin, N, N'-Bis-(3,5-di-t-butyl-4-hydroxyphenylpropionyl)-hydrazin, 3-Salicyloylamino-1,2,3-triazol, Bis-benzyliden-oxalsäuredihydrazid.
4. Phosphite und Phosphonite, beispielsweise
   Triphenylphosphit, Diphenylalkylphosphite, Phenyldialkylphosphite, Trisnonylphenylphosphit, Trilaurylphosphit, Trioctadecylphosphit, Distearylpentaerythrityl-diphosphit, Tris-(2,4-di-t-butylphenyl)-phosphit, Diisodecyl-pentaerythrityl-diphosphit, Bis-(2,4-di-t-butylphenyl)-pentaerythrityl-diphosphit, Tristearyl-sorbityltriphosphit, Tetrakis-(2,4-di-t-butylphenyl)-4,4'-biphenylen-diphosphonit, 3,9-Bis-(2,4-di-t-butylphenoxy)-2,4,8,10-tetraoxa-3,9-diphosphaspiro-[5.5]-undecan, Tris-(2-t-butyl-4-thio-(2'-methenyl-4'-hydroxy-5'-t-butyl)-phenyl-5-methenyl)-phenylphosphit.
5. Peroxidzerstörende Verbindungen, beispielsweise
   Ester der β-Thio-dipropionsäure, wie beispielsweise der Lauryl-, Stearyl-, Myristyl- oder Tridecylester, Mercaptobenzimidazol, das Zinksalz des 2-Mercapto-benzimidazols, Zink-alkyl-dithiocarbamate, Dioctadecylsulfid, Dioctadecyldisufid, Pentaerythrittetrakis-(β-dodecylmercapto)-propionat.
6. Basische Co-Stabilisatoren, beispielsweise
   Melamin, Polyvinylpyrrolidon, Dicyandiamid, Triallylcyanurat, Harnstoff-Derivate, Hydrazin-Derivate, Amine, Polyamine, Polyurethane, Alkali- und Erdalkalisalze höherer Fettsäuren oder Phenolate, beispielsweise Ca-Stearat, Zn-Stearat, Mg-Stearat, Na-Ricinoleat, K-Palmitat, Antimonbrenzcatechinat oder Zinnbrenzcatechinat, Hydroxide und Oxide von Erdalkalimetallen oder des Aluminiums, beispielsweise CaO, MgO, ZnO.
7. Nukleierungsmittel, beispielsweise
   4-t-Butylbenzoesäure, Adipinsäure, Diphenylessigsäure, Dibenzylidensorbitol.
8. Füllstoffe und Verstärkungsmittel, beispielsweise
   Calciumcarbonat, Silikate, Glasfasern, Asbest, Talk, Kaolin, Glimmer, Bariumsulfat, Metalloxide und -hydroxide, Ruß, Graphit.
9. Sonstige Zusätze, beispielsweise
   Weichmacher, Gleitmittel, Emulgatoren, Pigmente, optische Aufheller, Antistatika, Treibmittel.

Die verschiedenen zusätzlichen Additive der vorgenannten Gruppen 1 bis 7 werden den zu stabilisierenden Polymeren in einer Menge von 0,01 bis 10, vorzugsweise 0,01 bis 5 Gew.-%, bezogen auf das Gesamtgewicht der Formmasse, zugesetzt. Der Mengenanteil der Additive der Gruppen 8 und 9 beträgt 1 bis 80, vorzugsweise 10 bis 50 Gew.-%, bezogen auf die gesamte Formmasse.

Die Additive werden nach allgemein üblichen Methoden in die organischen Polymeren eingearbeitet. Die Einarbeitung kann beispielsweise durch Einmischen oder Aufbringen der Verbindungen und gegebenenfalls weiterer Additive in oder auf das Polymere unmittelbar nach der Polymerisation oder in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die Verbindungen sind auch wirksam, wenn sie in ein bereits granuliertes Polymer nachträglich in einem gesonderten Verarbeitungsschritt eingebracht werden.

Die erfindungsgemäß zu verwendenden Verbindungen können auch in Form eines Masterbatches, der diese Verbindungen beispielsweise in einer Konzentration von 30 bis 90, vorzugsweise 50 bis 80 Gew.-% enthält, den flammwidrig auszurüstenden Polymeren zugesetzt werden.

Die erfindungsgemäße Kunststoff-Formmasse kann in verschiedener Form angewendet werden, beispielsweise zur Herstellung flammwidrig ausgerüsteter Formteile, als flammwidrig ausgerüstete Folien, Fasern, Bändchen oder Profile.

Durch das erfindungsgemäß einzusetzende Flammschutzsystem wird sowohl die Verarbeitungstemperatur der Kunststoff-Formmasse erhöht, als auch die Wasserlöslichkeit von Teilen der Formmasse nach der Verarbeitung deutlich gesenkt. Außerdem zeigen die flammwidrig ausgerüsteten Kunststoffteile eine verringerte Neigung zum "Ausschwitzen" von Bestandteilen des Flammschutzsystems.

Die nachfolgenden Beispiele und Tabellen sollen die Erfindung näher erläutern.

Für die Herstellung der flammwidrigen Kunststoff-Formmassen wurde ein Polypropylen mit einem Schmelzindex MFI 230/5 von 55 g/10 min (®Hostalen PPU 0180, Hoechst) eingesetzt. Als Ammoniumpolyphosphat wurde ein im Handel erhältliches Produkt mit einem Wert für n von ca. 700 (® Exolit 422, Hoechst) verwendet. Die Verarbeitung erfolgte durch Mischen der Komponenten in einem Fluidmischer und Extrusion der Mischung in einem Einschneckenextruder (30 mm Schneckendurchmesser, 60 mm Länge) bei einer Temperatur von 230 bis 280°C. Während der Extrusion wurde die Massetemperatur schrittweise um 5 oder 10°C pro halbe Stunde erhöht. Dabei wurden das Einzugsverhalten der Mischung und die Qualität des extrudierten Strangs überprüft. Die in den Beispielen angegebene Grenztemperatur war erreicht, wenn der Polymerstrang sichtbar aufschäumte oder durch ungleichmäßigen Einzug der Mischung wiederholt abriß. Die Granulation des Polymerstrangs erfolgte unter Verwendung eines Granulators. Das auf diese Weise hergestellte Granulat wurde anschließend auf einer Spritzgußmaschine bei 220 bis 250°C zu Prüfkörpern von 127 mm Länge, 12,7 mm Breite und 1,6 mm Dicke geformt.

Das Brandverhalten der Prüfkörper wurde nach der Vorschrift von UNDERWRITERS LABORATORIES: "Test for Flammability of Plastic Material - UL 94" (Fassung vom 2. Mai 1975) ermittelt. Die Angabe "n.k." in den Tabellen bedeutet "nicht klassifizerbar nach UL 94".

Die Wasserlagerung der gewogenen Prüfkörper erfolgte in einem auf 23°C temperiertem, gerührten Bad. Nach 30 Tagen wurden die Prüfkörper zunächst 48 Stunden bei 80°C getrocknet und anschließend erneut gewogen.

In den Beispielen wurden als Komponente B folgende Polycarbonsäureester eingesetzt:

### Beispiel

- A (Vergleich): Tris(2-hydroxyethyl)isocyanurat (THEIC)
- B (Vergleich): THEIC-Ethylendiamintetraessigsäureester
- C (Vergleich): THEIC-Nitrilotriessigsäureester
- D (Vergleich): THEIC-Maleinsäureester
- 1: THEIC-Terephthalsäureester, monomer
- 2: THEIC-Terephthalsäureester, Dimer/Trimer-Gemisch
- 3: THEIC-Terephthalsäureester, Tetramer
- 4: wie Beispiel 3.

Die Versuchsergebnisse sind in der Tabelle zusammengestellt.

**Tabelle**

| Beispiel | A | B | C | D | 1 | 2 | 3 | 4 |
|---|---|---|---|---|---|---|---|---|
| Polypropylen [Gew.-%] | 72 | 72 | 72 | 72 | 72 | 72 | 72 | 72 |
| Komponente A [Gew.-%] | 20,7 | 20,7 | 20,7 | 20,7 | 20,7 | 20,7 | 20,7 | 19,4 |
| Komponente B [Gew.-%] | 5,1 | 5,1 | 5,1 | 5,1 | 5,1 | 5,1 | 5,1 | 6,5 |
| Standard-Additive [Gew.-%] | 0,2 | 0,2 | 0,2 | 0,2 | 0,2 | 0,2 | 0,2 | 0,2 |
| | | | | | | | | |
| Grenztemperatur bei Verarbeitung [°C] | 245 | 245 | 255 | 240 | 275 | 280 | 280 | 285 |
| | | | | | | | | |
| UL-94-Vertikaltest | V-0 | V-0 | V-0 | V-0 | V-0 | V-0 | V-2 | V-0 |
| | | | | | | | | |
| Gewichtsverlust bei Wasserlagerung 30 Tage bei 23°C [%] | 7 | 8,9 | 8,0 | 6,6 | 0,6 | 0,4 | 0,2 | 0,2 |
| | | | | | | | | |
| UL-94-Vertikaltest nach Wasserlagerung | V-2 | n.k. | n.k. | n.k. | V-2 | V-0 | V-2 | V-0 |

Ein Ausschwitzen von Bestandteilen des Flammschutzsystems konnte nicht beobachtet werden.

## Patentansprüche

1. Flammwidrige Kunststoff-Formmasse bestehend aus
50 bis 85 Gew.-%, bezogen auf die Gesamtmenge der Formmasse, eines Olefinpolymeren und
15 bis 50 Gew.-%, bezogen auf die Gesamtmenge der Formmasse, eines Flammschutzsystems bestehend aus
80 bis 50 Gew.-% eines Ammoniumpolyphosphats der Formel (NH₄PO₃)ₙ, worin n eine Zahl von 200 bis 1000 ist, (=Komponente A), und
50 bis 20 Gew.-% einer Verbindung (= Komponente B) enthaltend
a) Einheiten der Formel I 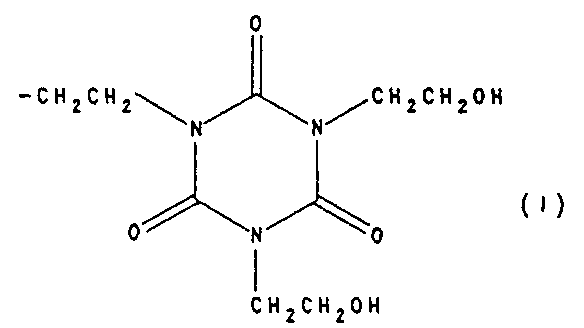
b) Einheiten der Formel II 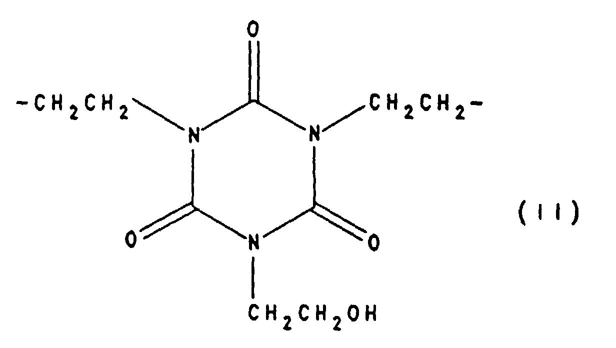
c) Einheiten der Formel III 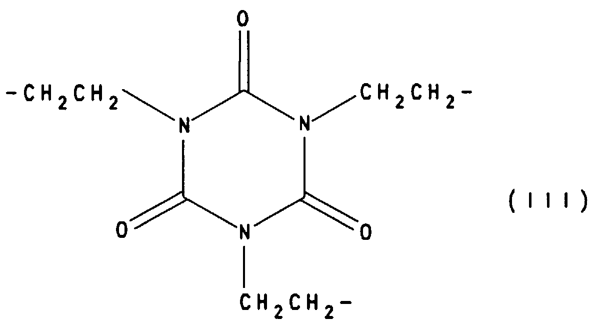 und
d) Einheiten der Formel (IV)
Ar(COO-)ₘ (IV),
worin Ar ein ein-, zwei- oder dreikemiges aromatisches Sechsringsystem bedeutet und m 2, 3 oder 4 ist.

2. Formmasse nach Anspruch 1, dadurch gekennzeichnet, daß das Olefinpolymere ein Polyolefin oder Polyethylen ist.

3. Formmasse nach Anspruch 1, dadurch gekennzeichnet, daß das Olefinpolymere Polypropylen ist.

4. Formmasse nach Anspruch 1, dadurch gekennzeichner, daß das Ammoniumpolyphosphat (Komponente A des Flammschutzsystems) mit 0,5 bis 25 % seines Gewichtes mit einem Coatingmittel umhüllt ist.

5. Verwendung der Formmasse gemäß Anspruch 1 zur Herstellung flammwidrig ausgerüsteter Formteile.

## Claims

1. A flame-retardant plastics molding composition comprising
50 to 85% by weight, based on the total amount of the molding composition, of an olefin polymer and
15 to 50% by weight, based on the total amount of the molding composition, of a flameproofing system comprising
80 to 50% by weight of an ammonium polyphosphate of the formula (NH₄PO₃)ₙ, in which n is a number from 200 to 1000 (= component A), and
50 to 20% by weight of a compound (= component B) comprising
a) units of the formula I 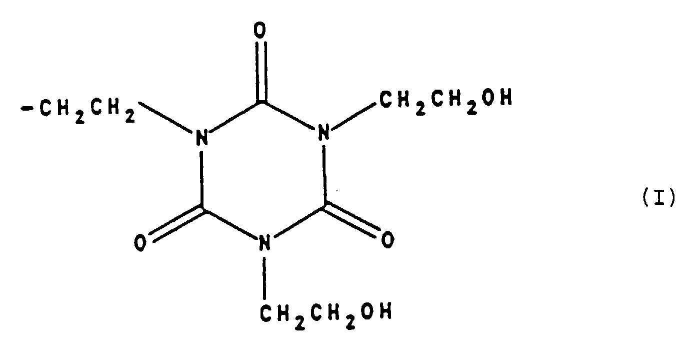
b) units of the formula II 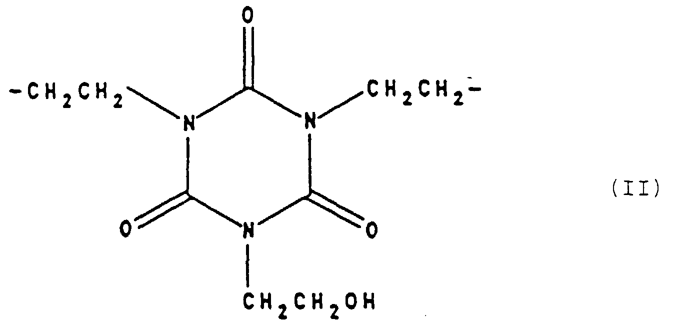
c) units of the formula III 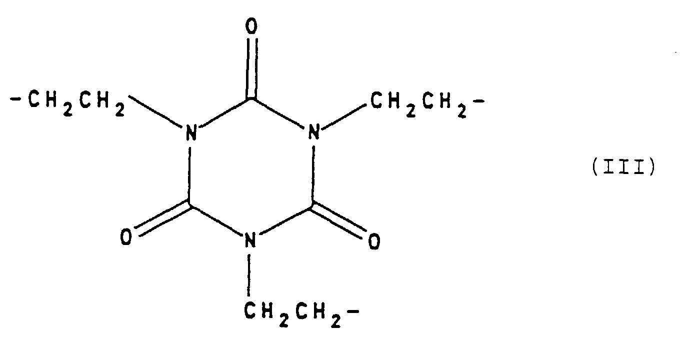 and
d) units of the formula IV
Ar(COO-)ₘ (IV)
in which Ar is a mono-, di- or trinuclear aromatic six-membered ring system and m is 2, 3 or 4.

2. A molding composition as claimed in claim 1, wherein the olefin polymer is a polyolefin or polyethylene.

3. A molding composition as claimed in claim 1, wherein the olefin polymer is polypropylene.

4. A molding composition as claimed in claim 1, wherein the ammonium polyphosphate (component A of the flameproofing system) is covered with 0.5 to 25% of its weight of a coating agent.

5. The use of a molding composition as claimed in claim 1 for the production of moldings provided with

## Revendications

1. Mélange à mouler plastique ignifuge, constitué
de 50 à 85 % en poids, par rapport à la quantité totale du mélange à mouler, d'un polymère d'oléfine, et
de 15 à 50 % en poids, par rapport à la quantité totale du mélange à mouler, d'un système d'ignifugation constitué
de 80 à 50 % en poids d'un polyphosphate d'ammonium de formule (NH₄PO₃)ₙ, où n est un nombre de 200 à 1000 (= Constituant A), et
de 50 à 20 % en poids d'un composé (= Constituant B) contenant
a) des motifs de formule I 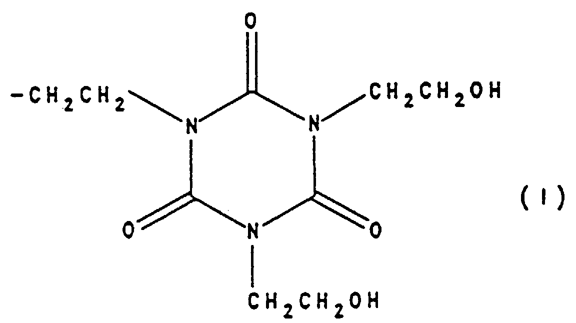
b) des motifs de formule Il 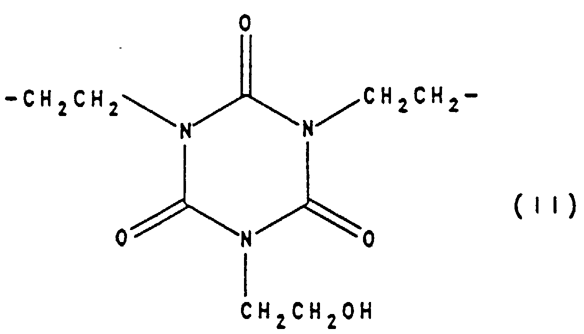
c) des motifs de formule III 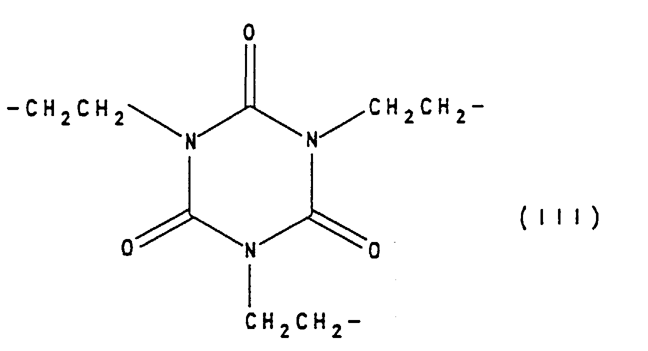 et
d) des motifs de formule IV
Ar(COO-)ₘ (IV)
dans laquelle Ar est un système comportant 1, 2 ou 3 noyaux aromatiques hexagonaux, et
m vaut 2, 3 ou 4.

2. Mélange à mouler selon la revendication 1, caractérisé en ce que le polymère d'une oléfine est une polyoléfine ou le polyéthylène.

3. Mélange à mouler selon la revendication 1, caractérisé en ce que le polymère d'oléfine est le polypropylène.

4. Mélange à mouler selon la revendication 1, caractérisé en ce que le polyphosphate d'ammonium (composant A du système d'ignifugation) est enrobé d'un agent d'enrobage, à raison de 0,5 à 25 % de son poids.

5. Utilisation du mélange à mouler selon la revendication 1 pour fabriquer des objets moulés ignifugés.
